Europäisches Patentamt

European Patent Office

Office européen des brevets

(19)

(11) Numéro de publication: **0 259 216**
**A1**

## (12) DEMANDE DE BREVET EUROPEEN

(21) Numéro de dépôt: **87401918.5**

(22) Date de dépôt: **20.08.87**

(51) Int. Cl.⁴: **B 65 G 47/24**

(30) Priorité: **03.09.86 FR 8612391**

(43) Date de publication de la demande:
**09.03.88 Bulletin 88/10**

(84) Etats contractants désignés:
**AT BE CH DE ES FR GB GR IT LI LU NL SE**

(71) Demandeur: **SANOFI**
**40, Avenue George V**
**F-75008 Paris (FR)**

(72) Inventeur: **Blanda, Guy**
**Rue du Port Communal 2**
**F-33230 Guitres (FR)**

(74) Mandataire: **Moncheny, Michel et al**
**c/o Cabinet Lavoix 2 Place d'Estienne d'Orves**
**F-75441 Paris Cedex 09 (FR)**

(54) **Procédé et dispositif pour le retournement tête-bêche et le conditionnement de corps oblongs dissymétriques.**

(57) Le procédé consiste à lancer verticalement deux des corps (2) présentés et à les dévier (11, 14) pour orienter l'extrémité amincie (2b) de l'un vers la gauche et l'extrémité amincie (4) de l'autre vers la droite, à laisser tomber ces corps (2) ainsi orientés à l'opposé l'un de l'autre sur des éléments de guidage (16, 17) et à les diriger l'un à côté de l'autre dans cette orientation tête-bêche vers un lieu de conditionnement (37 à 58).

Le dispositif comporte un dispositif de présentation (1) supportant les corps (2) verticalement suivant la même orientation, un poste de lancement et de déviation (9, 11) intervenant simultanément sur au moins une paire de corps (2b, 2t) amenés par le dispositif de présentation pour les distribuer tête-bêche : au moins une paire de rampes inclinées réceptrices (16, 17), et un dispositif de conditionnement (37 à 58).

Fig. 1

EP 0 259 216 A1

**Description**

## PROCEDE ET DISPOSITIF POUR LE RETOURNEMENT TETE-BECHE ET LE CONDITIONNEMENT DE CORPS OBLONGS DISSYMETRIQUES

La présente invention se rapporte, d'une manière générale, au conditionnement et à l'emballage de corps oblongs, en particulier de corps dissymétriques comportant une partie terminale, dite extrémité élargie, de section supérieure à celle de la partie terminale opposée dite extrémité amincie.

De tels corps oblongs sont généralement des corps cylindriques comportant une partie terminale aplatie, par exemple des tubes utilisés par l'industrie pharmaceutique, cosmétique ou alimentaire, tels que des tubes de pommade, des tubes de dentifrice, des tubes-canules contenant des microlavements, etc.

De manière à assurer un conditionnement valable dans un emballage de faibles dimensions et ainsi garantir les produits conditionnés contre tout risque de détérioration ou d'altération, il est nécessaire, lors de l'opération d'emballage, de procéder à l'inversion successive des corps à emballer de façon à les disposer tête-bêche pour chaque lit ou couche afin de compenser la différence de section entre les extrémités des corps considérés.

Généralement, une telle inversion est effectuée de façon manuelle au moment de l'emballage qui est réalisé au niveau d'un poste de réception alimenté en continu à partir d'une machine de production des corps oblongs remplis de leur contenu.

Une telle méthode ne peut pas être envisagée pour des unités de production élevée car il est nécessaire, dans ce cas, de prévoir plusieurs opérateurs pour un seul poste de réception afin d'absorber le débit de la machine productrice. Se pose alors le problème d'implantation du poste de réception dont l'encombrement croît avec le nombre d'opérateurs qui l'occupent.

La présente invention a pour but de résoudre ce problème en proposant un procédé et un dispositif permettant d'assurer automatiquement l'inversion des corps oblongs directement à la sortie de la machine productrice en amont du poste d'emballage et d'assurer ensuite automatiquement le conditionnement tête-bêche de ces corps inversés dans les emballages.

Outre l'accroissement de cadence qui en résulte, l'invention présente l'avantage de réduire le coût du conditionnement, d'améliorer la qualité et la constance de celle-ci, de constituer des unités implantables en n'importe quel lieu avec un minimum d'occupation du sol...

Pour atteindre le but précité et conformément à l'invention, le procédé consiste :

- à lancer verticalement deux des corps présentés et à les dévier pour orienter l'extrémité amincie de l'un vers la gauche et l'extrémité amincie de l'autre vers la droite,
- à laisser tomber ces corps ainsi orientés à l'opposé l'un de l'autre sur des éléments de guidage, et
- à les diriger l'un à côté de l'autre dans cette orientation tête-bêche vers un lieu de conditionnement.

De préférence, les corps sont déviés ou même côté situé à l'extérieur du dispositif qui les présente.

Le procédé consiste également, en fin de cheminement après chute :

- à réaligner parallèlement l'un à l'autre les corps de chaque paire amenés tête-bêche, en les vibrant indépendamment l'un de l'autre par rapport à un élément de positionnement et en les déposant dans des moyens mobiles de transport laissant subsister entre eux des espaces libres, et
- à transférer des premiers corps de même orientation de l'un de ces moyens dans un emballage et des deuxièmes corps de même orientation opposée dans les espaces libres de l'emballage, existant entre les premiers corps.

L'invention s'étend par ailleurs à un dispositif de rangement pour la mise en oeuvre du procédé précité, comportant :

- un dispositif de présentation supportant les corps verticalement suivant la même orientation,
- un poste de lancement et de déviation intervenant, simultanément sur au moins une paire de corps amenés par le dispositif de présentation pour les distribuer tête-bêche,
- au moins une paire de rampes inclinées réceptrices et
- un dispositif de conditionnement.

Suivant une forme de réalisation particulièrement avantageuse, le poste de lancement et de déviation comporte au moins deux organes à impulsion verticale, tels que des buses à air comprimé, des vérins ou autres, et au moins deux dispositifs déviateurs, disposés en regard l'un de l'autre, respectivement au-dessous et au-dessus du dispositif de présentation, chaque dispositif déviateur intervenant en direction de la rampe inclinée réceptrice correspondante en libérant en chute libre au-dessus de celle-ci chaque corps oblong dévié.

De préférence, le poste de lancement et de déviation comporte une pince pivotante à fermeture élastique et ouverture commandée et une rampe concave fixe disposées de façon que les trajectoires des corps oblongs soient orientées dans la même direction, vers l'extérieur du dispositif de présentation, de préférence constitué par un plateau tournant, et au-dessus de deux rampes inclinées contiguës de même pente.

Le dispositif de rangement peut également comporter, entre chacune des rampes inclinées amenant les corps tête-bêche et le dispositif de conditionnement, un dispositif de transfert constitué par un plateau élévateur qui, en position haute, est desservi not amment par la rampe inclinée considérée et relié à un vibreur permettant de réaligner dans un moyen de positionnement du plateau chaque corps oblong qui y parvient et, en position basse, dépose ce corps sur un transporteur du dispositif de conditionnement.

Chaque transporteur à corps oblongs du dispositif de conditionnement comporte, afin d'incliner les corps oblongs et de soutenir leurs extrémités, le long d'une rive, des crans pour recevoir les extrémités amincies de ces corps et, le long de la rive opposée, des pentes conférant l'inclinaison.

Le dispositif de conditionnement comporte, entre les transporteurs à corps oblongs et un transporteur à emballages s'étendant entre eux, des bras manipulateurs mobiles munis chacun d'un moyen de préhension, tel qu'une ventouse à vide, permettant de prélever plusieurs corps du transporteur correspondant, de les déplacer et de les déposer dans les emplacements "tête" d'un emballage prévus à cet effet et séparés par des emplacements "bêche" dans lesquels les corps de l'autre transporteur sont déposés par l'autre bras manipulateur.

Divers autres caractéristiques et avantages de l'invention ressortent d'ailleurs de la description détaillée qui suit.

Une forme de réalisation de l'objet de l'invention et des variantes sont représentées, à titre d'exemples non limitatifs, sur le dessin annexé.

Sur ce dessin :

- la figure 1 est une vue en plan schématique montrant une installation faisant application du dispositif de rangement selon l'invention,

- la figure 2 est une élévation de face prise à plus grande échelle suivant la ligne II-II de la figure 1, illustrant une forme de réalisation du dispositif de lancement et de déviation mis en oeuvre dans le dispositif de rangement.

- les figures 3 et 4 sont des élévations latérales prises suivant les lignes III-III et IV-IV respectivement de la figure 2 et représentant en deux vues distinctes superposables un jeu de deux lanceurs-déviateurs susceptibles d'intervenir simultanément sur deux corps voisins amenés en regard d'eux par le dispositif de présentation,

- la figure 5 est une vue correspondant à la superposition des figures 3 et 4, concernant une première variante de réalisation du jeu de lanceurs-déviateurs,

- la figure 6 est une vue analogue à la figure 5 se rapportant à une deuxième variante de réalisation du jeu de lanceurs-déviateurs,

- la figure 7 est une vue en coupe partielle prise à plus grande échelle suivant la ligne VII-VII de la figure 1, illustrant l'un des deux dispositifs de transfert mis en oeuvre dans le dis positif de rangement entre le poste de retournement tête-bêche et le poste de conditionnement,

- la figure 8 est une vue en plan partielle prise suivant la ligne VIII-VIII de la figure 7,

- les figures 9 et 10 sont des vues analogues aux figures 7 et 8 montrant le deuxième dispositif de transfert, la coupe de la figure 9 étant prise à plus grande échelle suivant la ligne IX-IX de la figure 1 et le plan de la figure 10 étant pris suivant la ligne X-X de la figure 9,

- les figures 11 et 12 sont des vues de détail partielles prises à plus grande échelle suivant les lignes XI-XI et XII-XII respectivement de la figure 10,

- la figure 13 est une vue en plan de dessus d'un emballage rempli avec des corps oblongs amenés tête-bêche.

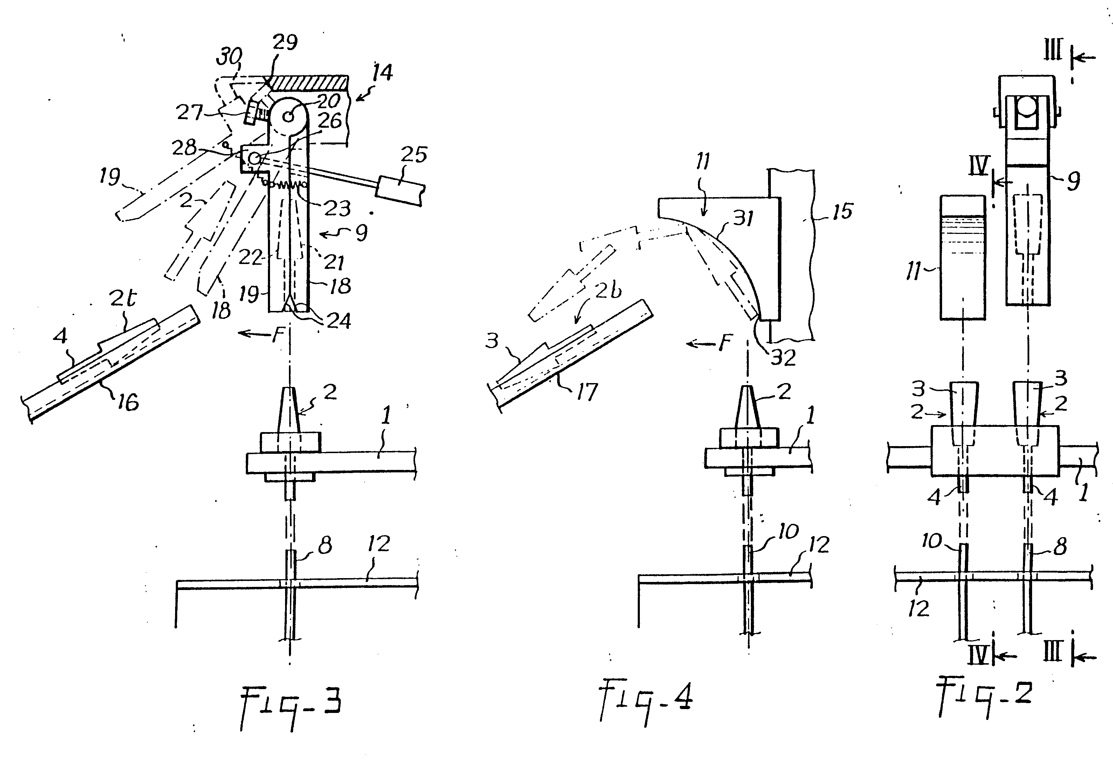

1 désigne un plateau tournant d'une machine de remplissage de corps oblongs 2 qui, dans l'exemple représenté, sont constitués par des tubes-canules destinés à contenir des microlavements. A l'une de ses extrémités 3 dite élargie, chaque corps 2 est aplati et, à son autre extrémité 4 dite amincie, le corps considéré est conformé en canule. Un tel corps oblong 2 est dissymétrique et, lorsqu'il est rempli, et qu'il tombe, il s'oriente par rapport à son centre de gravité pour tendre à rejoindre sa position d'équilibre stable. Ce phénomène est mis à profit pour que deux corps 2t et 2b contigus convenablement lancés et déviés parviennent tête-bêche sur des rampes inclinées, l'un 2t avec l'extrémité amincie 4 en avant et l'autre 2b avec l'extrémité élargie 3 en avant (figures 3 et 4).

Il est important de remarquer que les corps 2 sont rangés côte à côte sur la périphérie du plateau 1 et s'étendent verticalement suivant la même orientation, par exemple et ainsi que cela ressort de la figure 2, avec l'extrémité élargie 3 en haut.

Le dispositif de rangement décrit dans ce qui suit permet de manipuler automatiquement ces corps 2 du plateau 1 pour les placer tête-bêche dans un emballage 5 (figure 13). Ainsi, considérant deux corps 2 à prélever simultanément sur le plateau 1 (figure 2), le procédé consiste à les lancer vers le haut et à les dévier pour orienter l'extrémité amincie 4 de l'un 2t vers la gauche (figure 3) et de l'autre 2b vers la droite (figure 4), puis à les laisser tomber en poursuivant cette orientation sur des éléments de guidage pour que le corps 2t avance avec son extrémité rétrécie 4 vers l'avant (figure 3) et le corps 2b avec son extrémité rétrécie 4 vers l'arrière, ces corps 2t et 2b s'acheminant alors tête-bêche. Dans ce qui suit et pour condenser l'exposé, le corps 2t est dénommé corps "tête" et le corps 2b corps "bêche". Après manipulation des corps 2t et 2b ainsi inversés, les corps 2t sont rangés dans l'emballage 5 avec leurs extrémités élargies 3 situées dans le logement gauche 5g de cet emballage et séparées par les extrémités amincies 4 des corps 2b dont les extrémités élargies 3 se trouvent placées dans le logement droit 5d dudit emballage et séparées par les extrémités amincies 4 desdits corps 2t précités ; les extrémités amincies 4 de tous les corps sont centrées dans des encoches 6 d'une nervure 7 de l'emballage délimitant lesdits logements 5g, 5d. Ainsi, les corps 2t et 2b sont rangés tête-bêche au contact les uns des autres, sans perte de place.

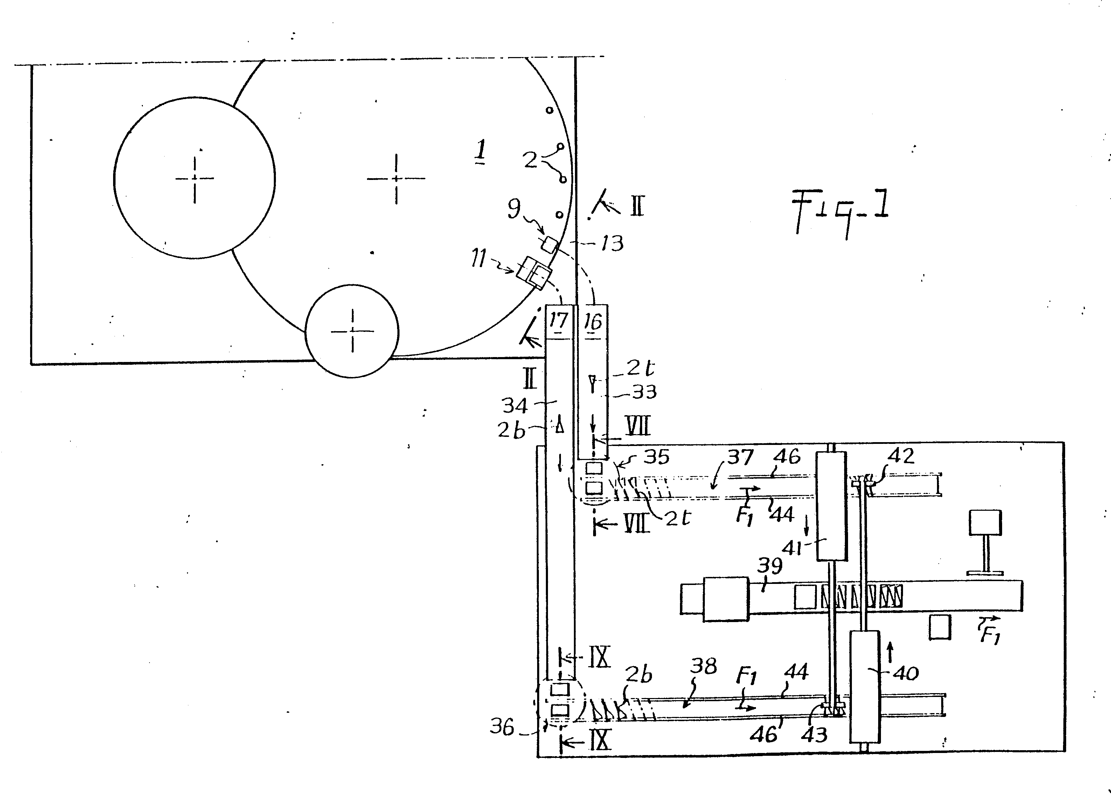

Comme le montrent les figures 1 à 4, le dispositif de rangement comporte :

- un premier organe à impulsion 8 et un premier dispositif déviateur 9 disposés à l'aplomb l'un de l'autre, en alignement avec un corps 2 lorsque le plateau s'étendant entre eux est arrêté (figure 2),

- un deuxième organe à impulsion 10 et un deuxième dispositif déviateur 11 disposés à l'aplomb l'un de l'autre, en alignement avec un autre corps 2 du plateau (figure 2),
l'ensemble lanceur et déviateur 8, 9 étant parallèle à l'ensemble lanceur et déviateur 10, 11.

Les organes à impulsion 8 et 10 sont destinés à lancer vers le haut les corps 2 et peuvent être constitués par une buse à air comprimé, un vérin, un poussoir à ressort, etc. Ils sont montés sur une plaque fixe 12 appartenant au bâti 13 qui supporte le plateau 1 et les matériels d'approvisionnement et de remplissage.

Les dispositifs déviateurs 9 et 11 sont montés sur des consoles 14 (figure 3) et 15 (figure 4) dudit bâti qui supporte également des rampes inclinées 16 et 17 destinées à recevoir les corps 2t et 2b après déviation.

Suivant la forme de réalisation illustrée par les figures 3 et 4, le dispositif déviateur 9 est une pince pivotante à fermeture élastique et ouverture commandée et le dispositif déviateur 11 est une rampe concave fixe.

Dans l'exemple représenté sur la figure 3, la pince 9 comporte deux mâchoires 18 et 19 qui, à leur extrémité supérieure, sont montées pivotantes autour d'un axe 20 de la console fixe 14. Les mâchoires délimitent en regard des alvéoles 21, 22 formant un logement destiné à recevoir, pour le prendre, lorsque la pince occupe la position d'attente en trait plein (figure 3), tout corps 2 lancé par l'organe 8. Ces mâchoires sont maintenues fermées pour pincer le corps, par un ressort 23 dont les extrémités sont accrochées sur elles, ce ressort ne s'opposant cependant pas à l'ouverture desdites mâchoires lorsque celle-ci est commandée soit par le corps lancé 2 intervenant pendant la pénétration contre l'entrée pentue 24 des mâchoires, soit par un vérin 25 ou autre organe d'actionnement. Le vérin 25 prend appui sur la console fixe 14, et sa partie mobile, telle que la tige de piston, traverse la mâchoire 18, dite postérieure si l'on considère le sens F de pivotement, et est articulée autour d'un axe 26 d'un renflement 28 de la mâchoire dite antérieure 19. Par ailleurs, la mâchoire postérieure 18 est munie d'une vis 27 formant un arrêtoir réglable qui coopère, en fin de pivotement, avec une butée fixe 29 de la console 14. La position de fin de pivotement de la mâchoire antérieure 19 est déterminée par la fin de course du vérin 25. Bien entendu, cette position peut être déterminée positivement par contact du renflement 28 ou d'une vis réglable de celui-ci avec un arrêtoir 30 de la console 14. Lors du pivotement de la pince 9 dans le sens de la flèche F, la vis-arrêtoir 27 entre en contact avec la butée 29, de sorte que la mâchoire postérieure 18 s'immobilise. La mâchoire antérieure 19 poursuit sa course, son arrêt étant déterminé, dans l'exemple représenté, par le vérin. Dès lors, la pince 9 s'ouvre, contre l'action antagoniste du ressort 23, et libère le corps 2 préalablement pincé. Ce corps, ainsi libéré chute sensiblement suivant la pente de la mâchoire postérieure 18 et tombe sur la rampe inclinée 16 avec son extrémité amincie 4 en avant. Il est considéré pour ce qui suit comme un corps tête 2t à manipuler. Ensuite, le vérin 25 fait pivoter la mâchoire antérieure 19 dans le sens opposé à celui de la flèche F et le ressort 23 se rétracte. Lorsque la pince 9 est fermée, l'arrêtoir 27 quitte la butée 29 et la mâchoire postérieure 18 accompagne en pivotement, pince fermée, la mâchoire antérieure 19.

Dans la forme de réalisation précitée, l'ensemble déviateur comporte non seulement la pince pivotante 9 coopérant avec le lanceur 8, mais également la rampe concave fixe 11 coopérant avec le lanceur 10.

Dans l'exemple représenté sur la figure 4, la rampe 11 présente un seul bord profilé concave 31 dont l'extrémité inférieure 32 est tangente à la trajectoire de lancement vertical du corps 2 et dont la courbure concave s'étend en s'élevant dans la direction de la flèche F. Par suite, le corps 2 lancé par le lanceur 10 est, comme celui qui est lancé par le lanceur 8, dévié vers l'extérieur du plateau de présentation 1, mais alors que le corps 2t tombant en chute libre de la pince 9 sur la rampe inclinée 16 s'achemine l'extrémité amincie 4 en avant, le corps bêche 2b tombant en chute libre de la rampe concave 11 sur la rampe inclinée 17 s'achemine l'extrémité élargie 3 en avant.

Les rampes inclinées 16 et 17 sont disposées côte à côte et alimentent en corps 2b, 2t orientés tête-bêche deux transporteurs de distribution 33 et 34 de longueurs différentes pour tenir compte des durées différentes d'intervention de la pince 9 et de la rampe concave 11 de déviation.

Bien entendu, des variantes de réalisation des dispositifs déviateurs coopérant avec les organes à impulsion 8 et 10 peuvent être mises en oeuvre.

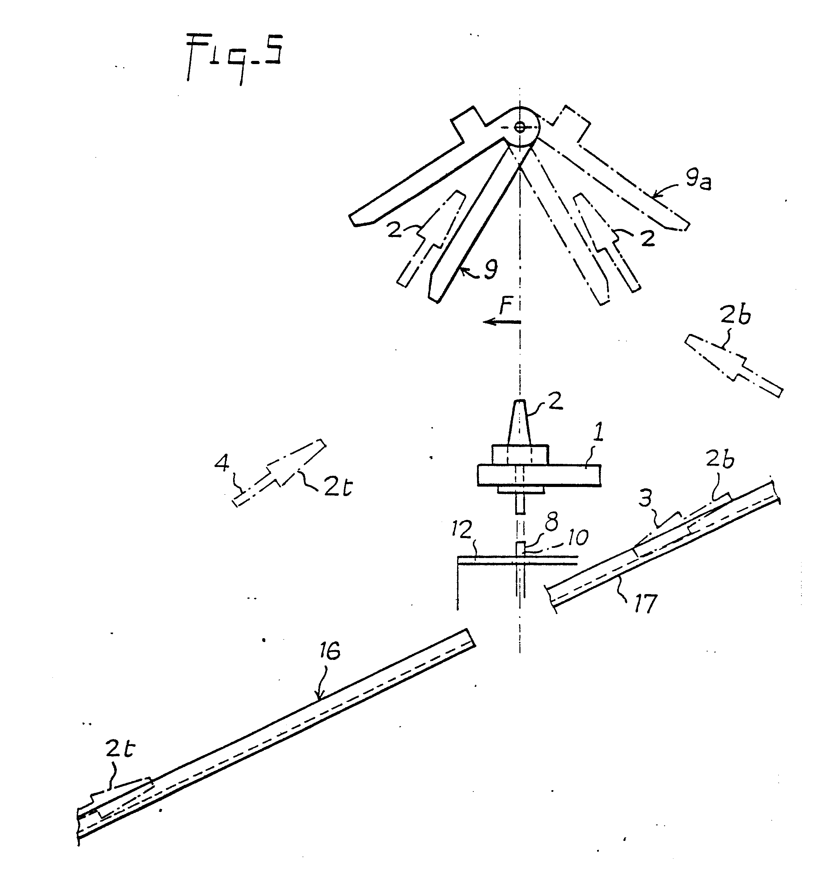

Suivant une première variante illustrée par la figure 5, les dispositifs déviateurs sont constitués :
- par une première pince 9 telle que décrite dans ce qui précède en se référant à la figure 3 et montée l'aplomb du lanceur 8, cette pince étant représentée en trait plein,
- et une deuxième pince 9a s'étendant symétriquement à la précédente à l'aplomb du lanceur 10, cette pince étant représentée en trait mixte.

Dès lors, la pince 9 dévie chaque corps 2 dans le sens de la flèche F et laisse tomber sur la rampe inclinée 16 ce corps 2t avec son extrémité amincie 4 dirigée vers l'avant. Par contre, la pince 9a dévie chaque corps 2 dans le sens opposé à celui de la flèche F et laisse tomber ce corps 2b sur la rampe inclinée 17 avec son extrémité élargie 3 dirigée vers l'avant.

La rampe 17 ne commence alors pas au même endroit que la rampe 16. Pour cette raison notamment et, bien que le temps de déviation par les deux pinces 9 et 9a est sensiblement le même, les rampes 16, 17 et les transporteurs 33, 34 qui les prolongent desservent en corps tête-bêche 2t, 2b des dispositifs de transfert 35 et 36 qui, comme dans le cas précédent, sont relativement éloignés l'un de l'autre.

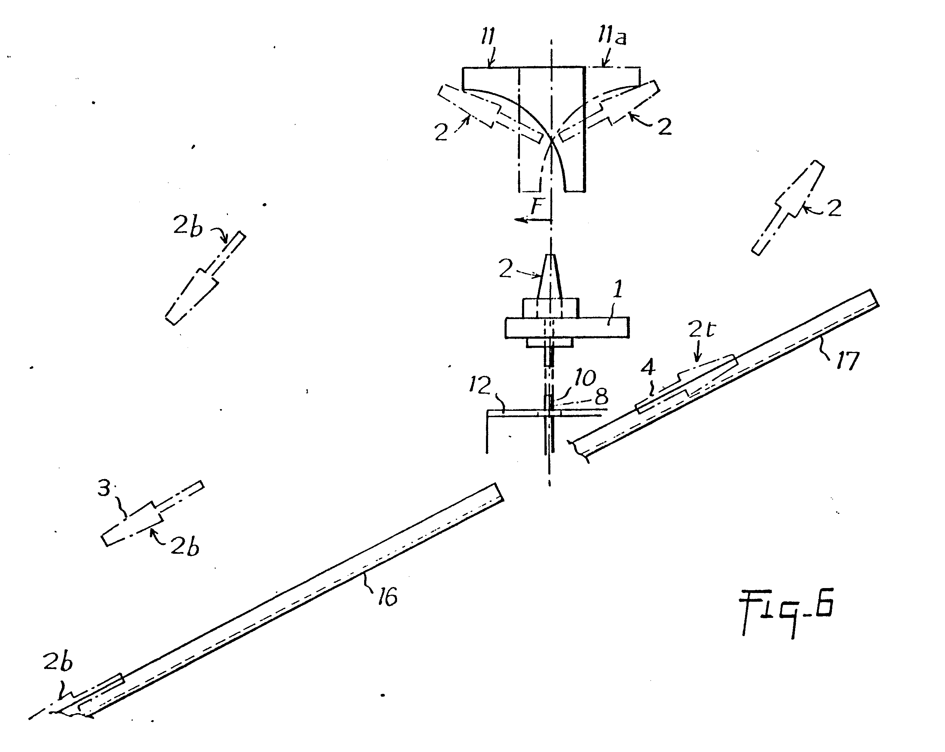

Suivant une deuxième variante illustrée par la figure 6, les dispositifs déviateurs sont constitués :
- par une première rampe concave fixe 11 telle que décrite dans ce qui précède en se référant à la figure 4 et montée à l'aplomb du lanceur 10, cette rampe étant représentée en trait plein,
- et par une deuxième rampe concave fixe 11a s'étendant symétriquement à la précédente à l'aplomb du lanceur 8, cette rampe étant représentée en trait mixte.

Dès lors, la rampe 11 dévie chaque corps 2 dans le sens de la flèche F et ce corps 2b tombe en chute libre sur la rampe inclinée 16 avec son extrémité élargie 3 dirigée vers l'avant. Par contre, la rampe 11a dévie chaque corps 2 dans le sens opposé à celui de la flèche F et ce corps 2t tombe en chute libre sur la rampe inclinée 17 avec son extrémité amincie 4 dirigée vers l'avant.

Dans cette deuxième variante, la disposition des rampes 16, 17, des transporteurs 33, 34 et des dispositifs de transfert 35, 36 est semblable à celle mise en oeuvre dans la première variante. Mais qu'il s'agisse de l'une (figure 5) ou de l'autre (figure 6), il faut que les corps 2b et 2t tombant des dispositifs déviateurs 9a et 11a, situés du côté intérieur si l'on considère leur acheminement vers l'extérieur (flèche F), puissent parvenir en chute libre sur la rampe inclinée 17 sans que le dispositif de présentation puisse s'y opposer. Si ce dispositif de présentation est le plateau 1 décrit dans ce qui précède, il doit présenter des ouvertures pour le passage en chute libre des corps 2b (figure 5) et 2t (figure 6). Mais rien ne s'oppose à ce que ledit dispositif soit une couronne annulaire guidée sur un chemin de roulement périphérique ou une chaîne sans fin rectiligne dans son trajet actif de présentation...

Outre les ensembles lanceurs et déviateurs 8 à 11, 9a, 11a, le dispositif de rangement de l'invention comporte un dispositif de conditionnement comprenant, ainsi que cela ressort de la figure 1, deux transporteurs d'acheminement 37 et 38 alimentés en corps oblongs 2b et 2t par les dispositifs de transfert 35 et 36 coopérant avec les transporteurs de distribution 33 et 34. Les transporteurs d'acheminement des corps oblongs 37, 38 s'étendent perpendiculairement aux transporteurs de distribution 33, 34 et de part et d'autre d'un transporteur 39 à emballages 5 auquel ils sont parallèles. Comme le montre la figure 13, les corps 2b et 2t ont leurs axes faiblement inclinés par rapport à l'axe de la nervure 7 des emballages 5, afin d'être parfaitement rangés sans perte de place. Dès lors, la même inclinaison se retrouve pour les corps 2t et 2b acheminés par les transporteurs 37 et 38 par rapport à la flèche $F_1$.

Etant donné que chaque emballage 5 comporte trois corps 2t et trois corps 2b, le dispositif de conditionnement comprend également deux bras manipulateurs 40 et 41 dont les extrémités mobiles entre les transporteurs 37, 38 et le transporteur 39 sont munies de moyens de préhension 42 et 43 permettant de prendre chacun trois corps simultanément. Dans l'exemple représenté, les bras manipulateur sont des vérins pneumatiques et leurs moyens de préhension, des ventouses à vide.

Bien entendu, les corps 2t et 2b doivent être rangés sur les transporteurs 37 et 38 suivant le même pas et la même inclinaison que dans les emballages 5 et le rangement est décalé d'un demi-pas d'un transporteur à l'autre.

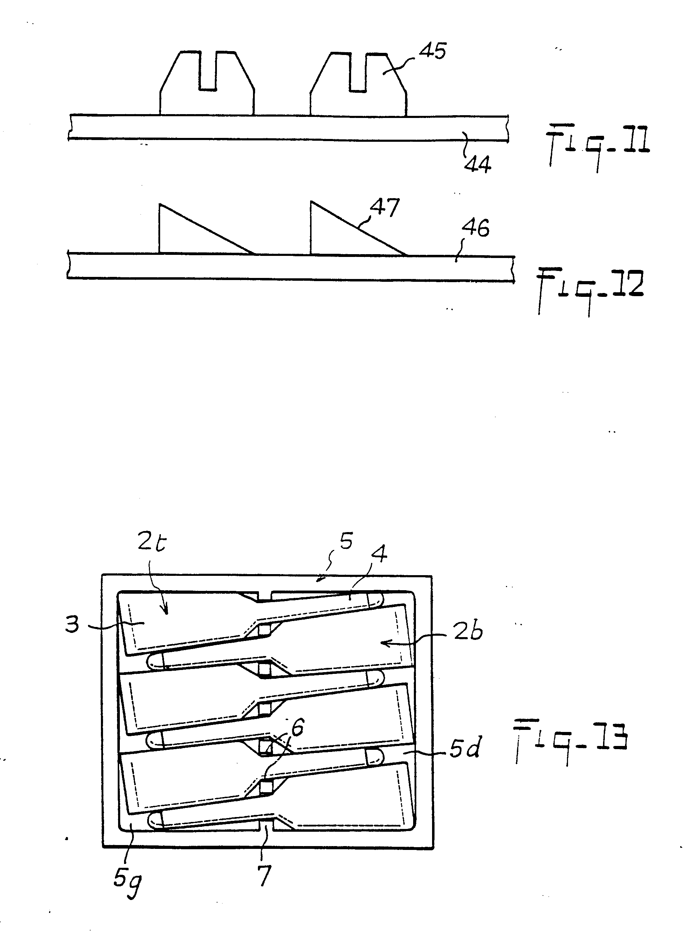

Les transporteurs 33, 34 et 39 peuvent être de n'importe quel type ; cependant, le type à bande sans fin semble préférable. Pour chacun des deux transporteurs 37, 38, il faut disposer en rive de moyens de positionnement (figures 11 et 12) permettant justement de déterminer le pas et l'inclinaison précités. Dès lors, ces transporteurs 37, 38 peuvent comporter une bande continue ou deux chaînes de rive ou autre, mais, quel que soit le type choisi, la rive intérieure 44 desdits transporteurs présente des plots à crans 45 (figure 11) permettant de centrer l'extrémité amincie 4 des corps oblongs 2, tandis que leur rive extérieure 46 présente des plots à pente 47 (figure 12) permettant d'incliner les corps 2 en intervenant par glissement sur leur extrémité élargie 3.

Ainsi que cela est exposé dans ce qui précède, un dispositif de transfert 35 est interposé entre le transporteur de distribution 33 et le transporteur d'acheminement 37 (figure 1).

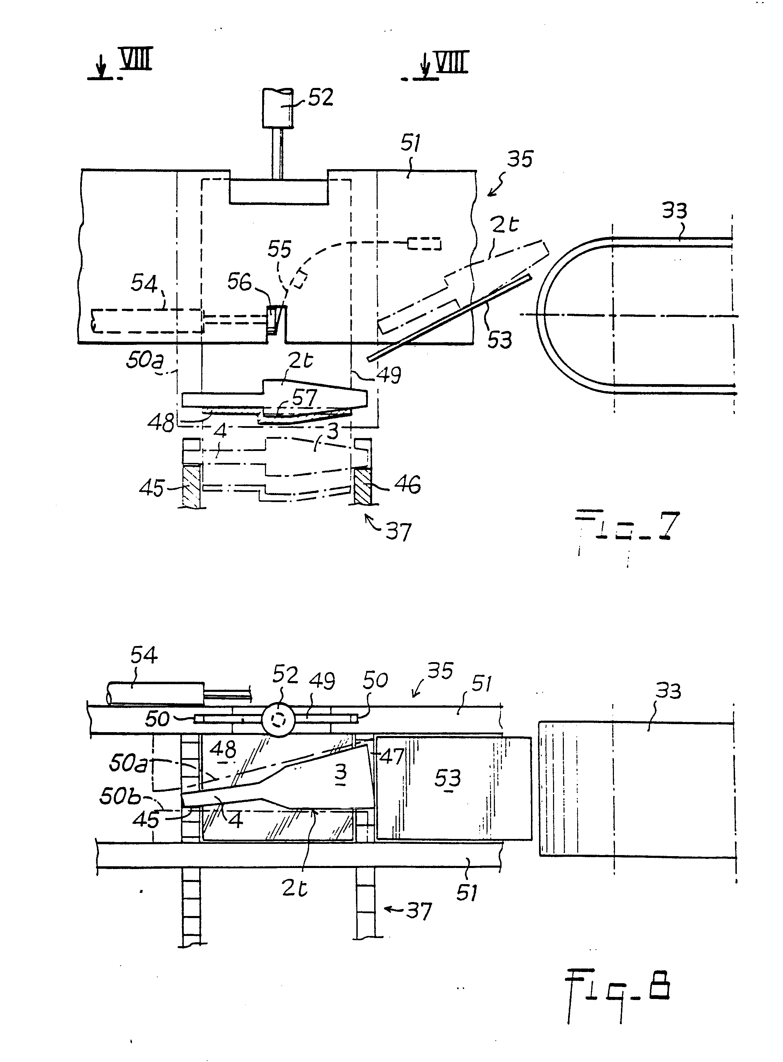

Comme le montrent les figures 7 et 8, le dispositif de transfert 35 comporte un plateau élévateur 48 faisant corps avec un montant 49 guidé en translation verticale dans des glissières 50 de l'une des deux plaques 51 d'un châssis du bâti fixe 13. Un organe d'actionnement 52, tel qu'un vérin, est relié à cet équipage mobile 48, 49 pour que le plateau 48 puisse occuper :

- une position haute représentée en trait plein sur la figure 7 et dans laquelle il peut recevoir tout corps 2t amené, extrémité amincie 4 en avant, par le transporteur 33 et délivré par une rampe inclinée 53, le plateau 48 étant alors situé au-dessus du transporteur 37,

- et une position basse représentée en trait mixte sur la figure 7 et dans laquelle il est situé sous le niveau de dépose du corps 2t considéré sur le transporteur 37.

Les corps 2t qui parviennent au plateau 48 sont convenablement orientés mais non parfaitement alignés. Il est nécessaire de procéder à cet alignement et, à cet effet, un moyen vibrateur est mis en oeuvre durant la descente du plateau. Dans l'exemple représenté, ce moyen comporte un vérin 54 et une lame flexible 55 portés par la plaque 51 à glissières 50, le montant 49 du plateau 48 présentant une saillie 56 qui s'interpose, en position haute, entre la tige du vérin et la lame flexible.

Suivant la forme de réalisation illustrée en trait plein sur les figures 7 et 8, pour que tout corps 2t s'aligne sous l'effet des vibrations provenant du système 54, 55 en action et transmises par le plateau 48, celui-ci comporte un moyen de positionnement constitué par un alvéole 57 au moins partiel.

Suivant la variante représentée en trait mixte sur les mêmes figures 7 et 8, le plateau 48 est plan et les plaques 51 sont munies de guides 50a et 50b s'étendant parallèlement aux bords du corps 2t à aligner et avec un certain jeu.

Après positionnement du corps 2t, le plateau 48 descend en vibrant et un moyen presseur, tel qu'un vérin pneumatique, des buses à air comprimé ou autres, maintient ce corps sur le plateau. Pendant cette descente, l'extrémité amincie 4 dudit corps se centre dans un cran 45 du transporteur 37 et l'extrémité élargie 3 s'appuie sur la pente 47 conjuguée qui provoque l'inclinaison de ce corps. Le plateau 48 descend un peu plus bas que ce niveau de dépose du corps 2t et, dès lors, le transporteur 37 peut avancer d'un pas, puis le plateau 48 remonter jusqu'à la position haute pour recevoir un nouveau corps 2t.

De la même façon que décrite en se référant aux figures 1, 7 et 8, un dispositif de transfert 36 est interposé entre le transporteur de distribution 34 et le transporteur d'acheminement 38.

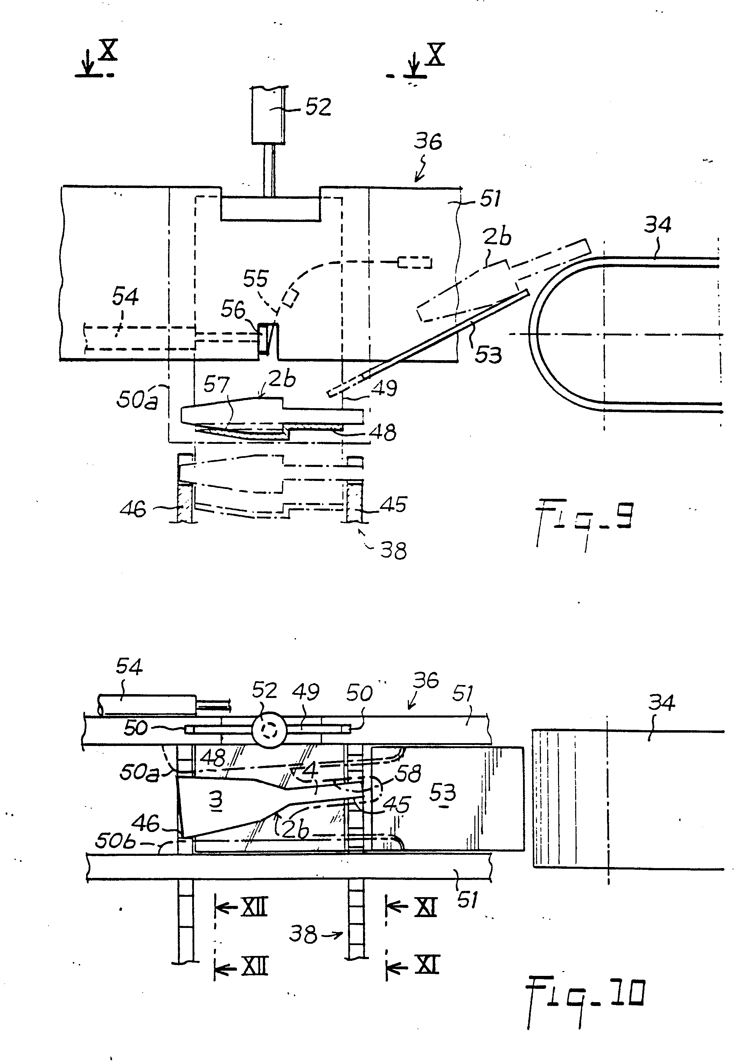

Ce dispositif de transfert 36 illustré par les figures 9 et 10 est dentique à celui 35 décrit dans ce qui précède en se référant aux figures 7 et 8. Tous ses composants sont alors désignés par les mêmes références et ne sont pas décrits à nouveau. Une seule différence réside dans le fait que, dans la variante illustrée en trait mixte, la rampe inclinée 53 est un peu plus étendue au-dessus du plateau 48 et délimite une échancrure 58 pour le guidage de l'extrémité amincie 4 des corps oblongs 2b.

**Revendications**

1. Procédé pour disposer tête-bêche horizontalement des corps oblongs dissymétriques (2), tels que des tubes-canules, comportant une extrémité amincie (4) et une extrémité élargie (3) et présentés verticalement côte à côte suivant la même orientation après remplissage,
caractérisé en ce qu'il consiste :
- à lancer verticalement deux des corps présentés et à les dévier pour orienter l'extrémité amincie de l'un vers la gauche et l'extrémité amincie de l'autre vers la droite,
- à laisser tomber ces corps ainsi orientés à l'opposé l'un de l'autre sur des éléments de guidage,
- et à les diriger l'un à côté de l'autre dans cette orientation tête-bêche vers un lieu de conditionnement.

2. Proceédé selon la revendication 1, caractérisé en ce que les corps sont déviés du même côté situé à l'extérieur du dispositif qui les présente.

3. Procédé selon la revendication 1 ou 2, caractérisé en ce qu'il consiste, en fin de cheminement après chute :
- à réaligner parallèlement l'un à l'autre les corps de chaque paire amenés tête-bêche en les vibrant indépendamment l'un de l'autre par rapport à un élément de positionnement et en les déposant dans des moyens mobiles de transport laissant subsister entre eux des espaces libres,
- et à transférer des premiers corps de même orientation de l'un de ces moyens dans un emballage et des deuxièmes corps de même orientation opposée dans les espaces libres de l'emballage, existant entre les premiers corps.

4. Dispositif de rangement pour la mise en oeuvre du procédé selon l'une quelconque des revendications 1 à 3, caractérisé en ce qu'il comporté :
- un dispositif de présentation (1) supportant les corps (2) verticalement suivant la même orientation,
- un poste de lancement et de déviation (8 à 11) intervenant simultanément sur au moins une paire de corps amenés par le dispositif de présentation pour les distribuer tête-bêche,
- au moins une paire de rampes inclinées réceptrices (16, 17),
- et un dispositif de conditionnement (37 à 58).

5. Dispositif selon la revendication 4, caractérisé en ce que le poste de lancement et de déviation comporte au moins deux organes à impulsion verticale (8, 10), tels que des buses à air comprimé, des vérins ou autres, et au moins deux dispositifs déviateurs (9, 11 ; 9, 9a ; 11, 11a), disposés en regard l'un de l'autre, respectivement au-dessous et au-dessus du dispositif de présentation (1), chaque dispositif déviateur intervenant en direction de la rampe inclinée réceptrice correspondante (16, 17), en libérant en chute libre au-dessus de celle-ci chaque corps oblong dévié (2b, 2t).

6. Dispositif selon la revendication 5, caractérisé en ce que l'un au moins des deux dispositifs déviateurs est une pince pivotante (9, 9a) à fermeture élastique et ouverture commandée.

7. Dispositif selon la revendication 6, caractérisé en ce que la pince (9, 9a) comporte deux mâchoires (18, 19) montées pivotantes à leur partie supérieure relativement l'une à l'autre autour d'un axe (20) d'un support fixe (14) et délimitant entre elles un logement récepteur (21, 22) pour chaque corps à prendre (2), ces mâchoires étant reliées entre elles par un organe élastique (23) et la mâchoire dite antérieure (19), si l'on considère le sens de pivotement (F), étant reliée à un organe d'actionnement (25) provoquant successivement le pivotement de la pince et son ouverture par butée d'un arrêtoir (27), de préférence réglable, de la mâchoire postérieure (18), la mâchoire antérieure (19) poursuivant sa course.

8. Dispositif selon la revendication 5, caractérisé en ce que l'un au moins des deux dispositifs déviateurs est une rampe concave fixe (11, 11a).

9. Dispositif selon l'une quelconque des revendications 5 à 8, caractérisé en ce que le poste de lancement et de déviation comporte une pince pivotante (9) et une rampe concave fixe (11) disposées de façon que les trajectoires des corps oblongs (2) soient orientées dans la même direction (F), vers l'extérieur du dispositif de présentation, de préférence constitué par un plateau tournant (1), et au-dessus de deux rampes inclinées (16, 17) contiguës de même pente.

10. Dispositif selon l'une quelconque des revendications 5 à 8, caractérisé en ce que le poste de lancement et de déviation comporte indifféremment deux pinces pivotantes (9, 9a) ou deux rampes concaves fixes (11, 11a), disposées de façon que les trajectoires des corps oblongs (2) soient orientées dans des directions opposées de part et d'autre du dispositif de présentation (1) et au-dessus de deux rampes inclinées (16, 17), un espace libre étant ménagé du côté intérieur du dispositif de présentation pour permettre le passage en chute libre des corps oblongs entre la pince ou la rampe concave et la rampe inclinée correspondante.

11. Dispositif selon la revendication 3, caractérisé en ce qu'il comporte, entre chacune des rampes inclinées (16, 17) amenant des corps tête-bêche (2t, 2b) et le dispositif de conditionnement (37 à 58), un dispositif de transfert (35 ; 36) constitué par un plateau élévateur (48) qui est desservi notamment par la rampe inclinée considérée (16 ; 17), est relié à un vibreur (54, 55), et coopère avec un moyen de guidage (57 ; 50a, 50b ; 58) de chaque corps oblong (2t ; 2b) qui y parvient et avec un moyen presseur dudit corps sur le plateau et, en position basse, dépose ce corps sur un transporteur (37 ; 38) du dispositif de conditionnement.

12. Dispositif selon la revendication 11, caractérisé en ce que le moyen de guidage précité de chaque corps oblong (2t ; 2b) est un alvéole (57) du plateau.

13. Dispositif selon la revendication 11, caractérisé en ce que le moyen de guidage précité de chaque corps oblong (2t) est constitué par des guides (50a ; 50b) fixes s'étendant parallèlement et à proximité de ce corps.

14. Dispositif selon la revendication 11, caractérisé en ce que le moyen de guidage précité de chaque corps oblong (2b) est une échancrure (58) d'une rampe inclinée d'alimentation (53).

15. Dispositif selon la revendication 11, caractérisé en ce que chaque transporteur à corps oblongs (37 ; 38) du dispositif de conditionnement comporte, afin d'incliner les corps oblongs (2t, 2b) et de soutenir leurs extrémités, le long d'une rive, des crans (45) pour recevoir les extrémités amincies (4) de ces corps et, le long de la rive opposée, des pentes (47) conférant l'inclinaison.

16. Dispositif selon la revendication 12, caractérisé en ce que le dispositif de conditionnement comporte, entre les transporteurs (37, 38) à corps oblongs et un transporteur (39) à emballages (5) s'étendant entre eux, des bras manipulateurs mobiles (40, 41) munis chacun d'un moyen de préhension (42 ; 43), tel qu'une ventouse à vide, permettant de prélever plusieurs corps (2t ; 2b) du transporteur correspondant, de les déplacer et de les déposer dans les emplacements "tête" d'un emballage (5) prévus à cet effet et séparés par des emplacements "bêche" dans lesquels les corps (2b ; 2t) de l'autre transporteur sont déposés par l'autre bras manipulateur.

**Fig-1**

0259216

Fig-2

Fig-3

Fig-4

0259216

Fig-5

0259216

Fig-6

0259216

Fig. 7

Fig. 8

0259216

Fig-9

Fig-10

0259216

Fig. 11

Fig. 12

Fig. 13

Office européen
des brevets

**RAPPORT DE RECHERCHE EUROPEENNE**

Numero de la demande

EP 87 40 1918

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | METALWORKING PRODUCTION, vol. 113, no. 17, 23 avril 1969, pages 58-61, Morgan Grampian Ltd, Londres, GB; "Orientating parts for assembly machines"<br>* Page 61, colonne 2 *<br>--- | 1,4,5,8,9 | B 65 G 47/24 |
| A | FR-A-2 172 468 (PONT-A-MOUSSON SA et al.)<br>* Revendication 1; figures *<br>--- | 3,12,16 | |
| A | NL-C- 105 458 (FMC CORP.)<br>* Revendication; figures *<br>----- | 6,7 | |

| DOMAINES TECHNIQUES RECHERCHES (Int. Cl.4) |
|---|
| B 65 G<br>B 65 H<br>B 65 B |

Le présent rapport a été établi pour toutes les revendications

| Lieu de la recherche | Date d'achèvement de la recherche | Examinateur |
|---|---|---|
| LA HAYE | 24-11-1987 | VAN ROLLEGHEM F.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant

EPO FORM 1503 03.82 (P0402)